# EUROPÄISCHE PATENTANMELDUNG

(11) **EP 2 543 540 A1**
(43) Veröffentlichungstag der Anmeldung: **09.01.2013**
(21) Anmeldenummer: 11173077.6
(22) Anmeldetag: 07.07.2011
(51) Int. Cl.: B60Q 1/00, F21S 8/00

(54) **Lichtleiter, Leuchtmittel und Kraftfahrzeugleuchte**

(71) Anmelder: Odelo GmbH, 71409 Schwaikheim (DE)
(72) Erfinder: Würtenberger, Dagmar, 70190 Stuttgart (DE)
(74) Vertreter: Benninger, Johannes

(57) **Zusammenfassung**

Es wird ein Lichtleiter (10) mit mindestens einer Lichteinkoppelfläche (12), mindestens einer von der wenigstens einen Lichteinkoppelfläche (12) verschiedenen Lichtauskoppelfläche (14), sowie wenigstens einer von der zumindest einen Lichtauskoppelfläche (14) verschiedenen Lichtumlenkfläche (16) beschrieben. Mindestens eine Lichtumlenkfläche (16) ist mit einer Hybrid-Lichtleiterauskoppelstruktur (20) bestehend aus mindestens einer ersten Lichtleiterauskoppelstruktur-Partie (30) und wenigstens einer an zumindest eine erste Lichtleiterauskoppelstruktur-Partie (30) angrenzenden zweiten Lichtleiterauskoppelstruktur-Partie (40) versehen. Die mindestens eine erste Lichtleiterauskoppelstruktur-Partie (30) umfasst zumindest zum Teil wenigstens eine Prismenstruktur (31), vermittels der in den Lichtleiter (10) an wenigstens einer Lichteinkoppelfläche (12) eingekoppeltes Licht (11) gezielt in mindestens einer Richtung (51) zur Lichtauskoppelfläche (14) hin umgelenkt und an der Lichtauskoppelfläche (14) unter Brechung beim Übergang vom Lichtleitermaterial zum umgebenden Medium (60) in wenigstens einer Vorzugsrichtung (50) unter Einhaltung einer vorgegebenen Leuchtdichte ausgekoppelt wird. Die mindestens eine zweite Lichtleiterauskoppelstruktur-Partie (40) umfasst wenigstens eine Diffusor-Struktur (41), vermittels der in den Lichtleiter (10) an wenigstens einer Lichteinkoppelfläche (12) eingekoppeltes Licht (11) mit einer statistischen Verteilung umgelenkt (52) und an der Lichtauskoppelfläche (14) unter Brechung beim Übergang vom Lichtleitermaterial zum umgebenden Medium (60) diffus ausgekoppelt wird. Darüber hinaus werden ein einen solchen Lichtleiter umfassendes Leuchtmittel sowie eine mit einem derartigen Leuchtmittel ausgestattete Kraftfahrzeugleuchte beschrieben.

## Beschreibung

Die Erfindung betrifft einen Lichtleiter gemäß dem Oberbegriff des Anspruchs 1, ein Leuchtmittel umfassend einen solchen Lichtleiter gemäß dem Oberbegriff des Anspruchs 9 sowie eine Kraftfahrzeugleuchte mit mindestens einem zuvor genannten Leuchtmittel gemäß dem Oberbegriff des Anspruchs 10.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einem Teil eines Leuchtmittels, beispielsweise hinter wenigstens einer Lichtquelle des zumindest einem Leuchtmittels, angeordneter Reflektor untergebracht sein. Der Reflektor kann zumindest zum Teil durch ein separates Bauteil und/oder durch wenigstens einen Teil des Leuchtengehäuses selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Kammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Darüber hinaus können bei einer Kraftfahrzeugleuchte ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche ein- und an mindestens einer von der Lichteinkoppelfläche verschiedenen Lichtauskoppelfläche wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Damit das aus einer Lichtauskoppelfläche austretende Licht bei einem solchen Lichtleiter einer bestimmten, bei einer Kraftfahrzeugleuchte gesetzlich vorgegebenen Lichtverteilung in eine oder mehrere Vorzugsrichtungen und Leuchtdichte in dieser einen oder mehreren Vorzugsrichtungen der Lichtauskopplung aus dem Lichtleiter genügt, sind beispielsweise auf einer der Lichtauskoppelfläche gegenüberliegenden Rückseite des Lichtleiters vorgesehene Lichtleiterauskoppelstrukturen mit einer gerichteten Auskopplung des in den Lichtleiter eingekoppelten Lichts in einer oder mehreren Vorzugsrichtungen beispielsweise über die gesamte Länge des Lichtleiters hinweg bekannt.

Diese Lichtleiterauskoppelstrukturen umfassen eine beispielsweise auf der Lichtleiterrückseite angeordnete, totalreflektierende Prismenstruktur, welche das Licht im Lichtleiter umlenkt und an einer gegenüberliegenden oder angrenzenden Lichtauskoppelfläche unter Brechung beim Übergang vom Lichtleitermaterial zur umgebenden Luft in mindestens einer Vorzugsrichtung unter Einhaltung einer den lichttechnischen Anforderungen in der mindestens einen Vorzugsrichtung genügenden Leuchtdichte auszukoppeln.

Dabei kommt es jedoch insbesondere bei gekrümmt verlaufenden Lichtleitern, wie sie insbesondere in Kraftfahrzeugen benötigt werden, um der Form einer in die Außenkontur eines Kraftfahrzeugs eingepassten Lichtscheibe einer Kraftfahrzeugleuchte zu folgen, aufgrund der gezielten Umlenkung in die eine oder mehreren Vorzugsrichtungen zu einer lokal stark inhomogenen Leuchtdichtenverteilung bei der Betrachtung aus einem Betrachtungswinkel. Diese macht sich durch eine mit bloßem Auge wahrnehmbar punktuell unterschiedlichen Helligkeiten im Erscheinungsbild des Lichtleiters bemerkbar. Dies wird als störend und den Qualitätseindruck nachhaltig negativ beeinflussend empfundenen.

Um ein homogenes Erscheinungsbild zu erhalten, welches frei von punktuell unterschiedlichen Helligkeiten ist, ist bekannt, Auskoppelstrukturen vorzusehen, die jedoch keine definierte Auskopplung in einer Vorzugsrichtung zulassen. Beispiele hierfür sind Diffusor-Strukturen, welche auf einer ungerichteten Ablenkung des Lichts an mikroskopisch kleinen, typischerweise auf einer der Lichtauskoppelfläche gegenüberliegenden Lichtleiterrückseite vorgesehenen Flächen beruhen. Solche Diffusor-Strukturen werden beispielsweise durch eine gezielte, jedoch einer statistischen Verteilung unterliegende Oberflächenrauigkeit erhalten.

Nachteilig hieran ist, dass mit solchen Diffusor-Strukturen keine gezielte Auskopplung in einer oder mehreren beispielsweise durch gesetzliche Vorgaben definierten Vorzugsrichtungen möglich ist. Um demnach bei einer solchen, ein homogenes Erscheinungsbild aufweisenden Diffusor-Struktur beispielsweise gesetzliche Vorgaben durch Einhaltung eines den lichttechnischen Anforderungen in Vorzugsrichtung genügenden Leuchtdichte zu erfüllen, muss eine wesentlich höhere Lichtstrahlungsleistung bzw. ein wesentlich höherer Lichtstrom in den Lichtleiter eingekoppelt werden, was einerseits einen hohen Bauraumbedarf zur Folge hat, andererseits aufgrund der hierfür erforderlichen stärkeren und/oder mehreren Lichtquellen höhere Kosten nach sich zieht und außerdem zu einem unnötig hohen Stromverbrauch einhergehend mit einer stärkeren Belastung und damit Auslegung des Bordnetzes eines Kraftfahrzeugs führt. Außerdem kann vermittels Diffusor-Strukturen der entlang des Lichtleiters lokal ausgekoppelte Lichtstrom nicht gut oder gar nicht gesteuert werden, was jedoch notwendig ist, um beispielsweise auch Endbereiche eines Lichtleiters hell erscheinen zu lassen.

Darüber hinaus ist bekannt, eine totalreflektierende Prismenstruktur mit wohldefinierten Prismenelementen auf einer der Lichtauskoppelfläche gegenüberliegenden Lichtleiterrückseite vorzusehen, und an der Lichtauskoppelfläche Diffusor-Strukturen mit einer statistischen Verteilung der Wirkelemente, beispielsweise zusätzliche Deckelemente mit rauer Oberfläche, und/oder eine oder mehrere diffus reflektierende Umgebungsflächen des Lichtleiters vorzusehen.

Außerdem sind Lichtleiter mit einer glatten Lichtleiterrückseite und einer rauen Frontfläche als Auskoppelfläche bekannt.

Auch diese Maßnahmen genügen nicht, um die geschilderten Nachteile zumindest ansatzweise zu lösen.

Zur Hintergrundbeleuchtung von LCD-Displays ist ferner bekannt, eine regelmäßige Auskoppelstruktur vorzusehen, welche eine Vorzugsrichtung der Lichtauskopplung normal zur Vorderseite des LCD-Displays bewirkt. Deren Verwendung bei Kraftfahrzeugleuchten scheitert jedoch am im Raum dreidimensional gekrümmten Verlauf von Lichtleitern in Kraftfahrzeugleuchten und der damit aus Sicht des Lichtleiters mit der Krümmung lokal veränderlichen Vorzugsrichtung.

Durch US 7,431,481 B2 ist ein starres Lichtleiterelement mit auf seiner einer ebenen Lichtauskoppelfläche gegenüberliegenden Lichtleiterrückseite vorgesehenen Prismenstrukturen bekannt. Diese Prismenstrukturen dienen einer Lichtauskopplung in einer normal zur Lichtauskoppelfläche orientierten Vorzugsrichtung.

Nachteilig hieran ist neben dem komplexen Aufbau, dass wenn mehrere Vorzugsrichtungen mit einem solchen Lichtleiterelement verwirklicht werden sollen, keine homogene Leuchtdichtenverteilung erhalten werden kann. Darüber hinaus ist das Lichtleiterelement nicht geeignet, einem gekrümmten Verlauf einer Lichtscheibe zu folgen.

Durch US 7,401,963 B2 ist ein Lichtleiterelement mit verschiedenen, auf mehreren Lichtauskoppelflächenpartien gegenüberliegenden Lichtleiterrückseitenpartien angeordneten Prismenstrukturen bekannt. Darüber hinaus ist inmitten einer Lichteinkoppelpartie auf der Lichtleiterrückseite ein durch eine eine interne Totalreflexion bewirkende Aussparung hergestelltes Prisma vorgesehen. Das eingekoppelte Licht wird dabei zunächst an dem Prisma, anschließend an einer ersten Prismenstruktur und daraufhin an einer zweiten Prismenstruktur gezielt rechtwinklig umgelenkt, bis es durch die an ihren Oberflächen glatt ausgeführten, in einer Ebene liegenden, gewölbten Lichtauskoppelflächenpartien durch eine von der lokalen Orientierung der gewölbten Lichtauskoppelflächenpartien abhängigen Brechung in mehrere Richtungen gestreut wird.

Nachteilig hieran ist, dass für einen Betrachter die gewölbten Lichtauskoppelflächenpartien nur in denjenigen Bereichen hell erscheinen, in denen Licht in seine Richtung austritt. Damit wird weder eine für den Betrachter homogene Leuchtdichtenverteilung erhalten, noch ist das Lichtleiterelement aufgrund seines sehr komplizierten Aufbaus in Verbindung mit der Vielzahl der rechtwinkligen Lichtumlenkungen zur Anpassung an einen gekrümmten Verlauf einer Lichtscheibe geeignet.

Durch EP 1 561 070 B1 ist ein Lichtleiterelement bekannt. Prismenstrukturen auf zwei gemeinsam die Lichtleiterrückseite bildenden Lichtleiterrückseitenpartien dienen einer Lichtauskopplung in einer normal zur der Lichtleiterrückseite gegenüberliegenden, ebenen Lichtauskoppelfläche orientierten Vorzugsrichtung. Vermittels überlappender, gegenläufiger Prismenstrukturen auf den zwei der Lichtauskoppelfläche gegenüberliegenden Lichtleiterrückseitenpartien und beidseitige Lichteinkopplung an zwei gegenüberliegenden, die Endbereiche des Lichtleiterelements bildende und die Lichtauskoppelfläche mit der Lichtleiterrückseite verbindenden Lichteinkoppelflächen wird einerseits eine gleichmäßige Ausleuchtung der Lichtauskoppelfläche erhalten und darüber hinaus eine helle Erscheinung auch der Endbereiche des Lichtleiters bei einer Betrachtung aus einer der Vorzugsrichtung der Lichtauskopplung entsprechenden Richtung normal zur durch eine Lichtleitervorderseite gebildeten Lichtauskoppelfläche.

Nachteilig hieran ist, dass wenn mehrere Vorzugsrichtungen mit einem solchen Lichtleiterelement verwirklicht werden sollen, keine homogene Leuchtdichtenverteilung erhalten werden kann. Darüber hinaus ist das ebene Lichtleiterelement nicht geeignet, einem gekrümmten Verlauf einer Lichtscheibe zu folgen.

Durch DE 198 04 440 A1 ist bekannt, einen stabförmigen Lichtleiter für eine Kraftfahrzeugleuchte mit einer dem Lichtstrom im Lichtleiter angepassten Prismenstruktur auf seiner der sich entlang der Stabform erstreckenden Lichtauskoppelfläche abgewandten Lichtleiterrückseite zu versehen, um eine homogene Ausleuchtung des Lichtleiters zu erhalten. Die Anpassung sieht vor, dass die über die gesamte Länge identisch beabstandeten und identisch geformten Prismen um so breiter sind, je kleiner der Lichtstrom im Lichtleiter. Dabei nimmt der Lichtstrom im Lichtleiter von einer von der Lichtauskoppelfläche verschiedenen, durch eine Stirnfläche an einem ersten Ende des Lichtleiters gebildeten Lichteinkoppelfläche ausgehend zu einem von dem ersten Ende entfernten zweiten Ende hin durch eine über die Länge des Lichtleiters stattfindende Lichtauskopplung ab.

Nachteilig hieran ist, dass der gerade, stabförmige Lichtleiter über seine gesamte Länge eine identische Vorzugsrichtung der Lichtauskopplung in Bezug auf die Lichtauskoppelfläche aufweist. Wird der stabförmige Lichtleiter gekrümmt angeordnet, verändert sich diese Vorzugsrichtung mit der sich durch die Krümmung verändernden lokalen Orientierung der Lichtaustrittsfläche des Lichtleiters. Eine Erfüllung gesetzlicher Vorgaben bezüglich Lichtverteilung und Leuchtdichte ist damit nur durch eine entsprechende Erhöhung der eingekoppelten Lichtstärke möglich, einhergehend mit den Eingangs erwähnten Nachteilen eines hohen Bauraumbedarfs für die entsprechend stark dimensionierte mindestens eine Lichtquelle, der höheren Kosten aufgrund der hierfür erforderlichen stärkeren und/oder mehreren Lichtquellen, sowie des unnötig hohen Stromverbrauchs einhergehend mit einer stärkeren Belastung und damit Auslegung des Bordnetzes eines Kraftfahrzeugs. Darüber hinaus scheint jeweils nur der mit der Prismenstruktur hinterlegte Teil der Lichtauskoppelfläche aus Richtung der Vorzugsrichtung gesehen hell. Verbleibende Teile, beispielsweise solche, in denen sich die Prismen nur über einen Teil der Breite der Lichtleiterrückseite erstrecken erschenen demgegenüber dunkel. Dadurch weist der Lichtleiter zwar über seine Länge messtechnisch homogene Leuchtdichte in Vorzugsrichtung auf, erscheint jedoch insbesondere bei einem gekrümmten Verlauf über seine Länge hinweg unterschiedlich hell sowie in seiner Breite unterschiedlich ausgeleuchtet.

Der Erfindung liegt die Aufgabe zu Grunde, einen Lichtleiter, ein Leuchtmittel mit einem Lichtleiter und eine Kraftfahrzeugleuchte mit einem einen Lichtleiter umfassenden Leuchtmittel zu entwickeln, welche eine Lichtauskopplung in einer oder mehreren, in ihrer Orientierung zu einer lokalen Flächennormale einer Lichtauskoppelfläche verschiedenen Vorzugsrichtungen bei gleichzeitig homogener Leuchtdichtenverteilung aufweisen.

Die Aufgabe wird jeweils gelöst mit den Merkmalen der unabhängigen Ansprüche.

Ein erster Gegenstand der Erfindung betrifft demnach einen beispielsweise stabförmigen, vorzugsweise beispielsweise in einer Ebene und/oder besonders bevorzugt dreidimensional im Raum gekrümmt verlaufenden Lichtleiter mit mindestens einer Lichteinkoppelfläche, mindestens einer von der wenigstens einen Lichteinkoppelfläche verschiedene Lichtauskoppelfläche, sowie wenigstens eine von der zumindest einen Lichtauskoppelfläche verschiedene Lichtumlenkfläche. Die mindestens eine Lichtumlenkfläche ist bevorzugt auf wenigstens einer der zumindest einen Lichtauskoppelfläche gegenüberliegenden Lichtleiterrückseite angeordnet oder von einer solchen umfasst oder umfasst eine solche.

Mindestens eine Lichtumlenkfläche ist mit einer Hybrid-Lichtleiterauskoppelstruktur versehen. Die Hybrid-Lichtleiterauskoppelstruktur besteht aus mindestens einer ersten Lichtleiterauskoppelstruktur-Partie und wenigstens einer an zumindest eine erste Lichtleiterauskoppelstruktur-Partie angrenzenden zweiten Lichtleiterauskoppelstruktur-Partie.

Die mindestens eine erste Lichtleiterauskoppelstruktur-Partie umfasst vorzugsweise zumindest zum Teil wenigstens eine beispielsweise totalreflektierende Prismenstruktur, vermittels der in den Lichtleiter an wenigstens einer Lichteinkoppelfläche eingekoppeltes Licht gezielt in einer oder mehreren Richtungen zur Lichtauskoppelfläche hin umgelenkt und an der Lichtauskoppelfläche unter Brechung beim Übergang vom Lichtleitermaterial zum umgebenden Medium, beispielsweise zur umgebenden Luft, in wenigstens einer Vorzugsrichtung unter Einhaltung einer beispielsweise gesetzlich vorgegebenen lichttechnischen Anforderungen an eine Kraftfahrzeugleuchte in einer oder mehreren Vorzugsrichtungen genügenden Leuchtdichte ausgekoppelt wird. Die Vorzugsrichtungen sind dabei durch eine ebenfalls beispielsweise gesetzlich vorgegebene Lichtverteilung definiert.

Die mindestens eine an zumindest eine erste Lichtleiterauskoppelstruktur-Partie angrenzende zweite Lichtleiterauskoppelstruktur-Partie umfasst vorzugsweise wenigstens eine Diffusor-Struktur, vermittels der in den Lichtleiter an wenigstens einer Lichteinkoppelfläche eingekoppeltes Licht mit einer statistischen Verteilung umgelenkt und an der Lichtauskoppelfläche unter Brechung beim Übergang vom Lichtleitermaterial zum umgebenden Medium diffus ausgekoppelt wird.

Die Prismenstruktur umfasst vorzugsweise wenigstens eine gemäß den die Lichtverteilung in einer oder mehreren Vorzugsrichtungen sowie die Leuchtdichte in der mindestens einen Vorzugsrichtung umfassenden lichttechnischen Anforderungen definierte Wirkfläche zumindest eines Prismenelements.

Bei dem Prismenelement handelt es sich bevorzugt um eine Struktur mit einer oder mehreren eine interne Totalreflexion im Lichtleiter bewirkenden Wirkflächen. Eine ein oder mehrere solche Prismenelemente umfassende Prismenstruktur kann auch als totalreflektierende Prismenstruktur bezeichnet werden.

Die Prismenstruktur stellt damit die Einhaltung der lichttechnischen Anforderungen sicher.

Die Diffusor-Struktur umfasst wenigstens eine Fläche mit einer beispielsweise durch eine gezielte, jedoch einer statistischen Verteilung unterliegende Oberflächenrauigkeit erhaltenen statistischen Verteilung der die diffuse Auskopplung ursächlich bewirkenden statistisch verteilten Umlenkung verursachenden Wirkelemente. Bei den Wirkelementen handelt es sich beispielsweise um das Licht umlenkende, kleine Flächenabschnitte mit Abmessungen in der Dimension der Oberflächenrauigkeit.

Die Diffusor-Struktur stellt damit den Erhalt eines homogenen Eindrucks des Lichtleiters für den Betrachter aus unterschiedlichen Richtungen sicher.

Die zweite Lichtleiterauskoppelstruktur-Partie kann eine oder mehrere lichttechnisch unwirksame bzw. für die Lichtverteilung in der mindestens einen Vorzugsrichtung unwirksame Flächen, wie etwa eine oder mehrere Stirnflächen der Prismenelemente der Prismenstruktur umfassen. Diese beispielsweise Stirnflächen umfassende Flächen können aufgeraut ausgeführt bzw. mit einer vorgegebenen Oberflächenrauigkeit versehen sein.

Alternativ oder zusätzlich kann die zweite Lichtleiterauskoppelstruktur-Partie zwischen in Erstreckungsrichtung beispielsweise eines stabförmigen Lichtleiters und/oder quer zur Erstreckungsrichtung beispielsweise eines stabförmigen Lichtleiters benachbarten Prismenelementen liegende Flächenabschnitte umfassen. Diese Flächenabschnitte können aufgeraut ausgeführt bzw. mit einer vorgegebenen Oberflächenrauigkeit versehen sein.

Benachbarte Prismenelemente der Prismenstruktur der ersten Lichtleiterauskoppelstruktur-Partie können unterschiedliche breit und/oder unterschiedlich hoch und/oder auf ihrer Vorder- und/oder Rückseite unterschiedlich geneigt beispielsweise auf einer Lichtleiterrückseite aufstehend ausgebildet sein. Alternativ oder zusätzlich können benachbarte Prismenelemente unterschiedliche Orientierungen relativ zu einer Mittelachse des beispielsweise stabförmigen Lichtleiters aufweisen. Die Mittelachse kann dabei beispielsweise definiert sein als stetige oder unstetige mathematische Kurve, auf der die Schwerpunkte aller aufeinander folgender Querschnittsflächen des Lichtleiters liegen.

Zwischen gegebenenfalls in Richtung entlang der Mittelachse sowie gegebenenfalls alternativ oder zusätzlich quer zu der Mittelachse benachbarten Prismenelementen liegende Flächenabschnitte können gleiche und/oder unterschiedliche Abmessungen und/oder gleiche und/oder unterschiedliche Geometrien in und/oder quer zur Mittelachse des Lichtleiters aufweisen.

Die Prismenstruktur kann pyramidenförmige Prismenelemente, so genannte Dots, mit allseitig sich erhebenden und in einer Spitze treffenden Mantelflächen umfassen. Von diesen Mantelflächen können eine, mehrere oder alle lichttechnisch wirksame Wirkflächen umfassen. Die Prismenstruktur kann alternativ oder zusätzlich sägezahnförmige Prismenelemente mit nur zwei linienförmig aneinander angrenzenden lichttechnisch wirksamen Wirkflächen sowie diese beidseitig abschließenden lichttechnisch unwirksame, Stirnflächen bildende Flächen umfassen. Ebenso kann die Prismenstruktur als sich über die gesamte Breite des Lichtleiters erstreckende Vollzacken ausgeführte Prismenelemente umfassen.

Die lichttechnisch wirksamen Wirkflächen der Prismenelemente können ebenso wie die lichttechnisch unwirksamen, beispielsweise Stirnflächen der Prismenelemente umfassenden Flächen zumindest teilweise abschnittsweise konkav und/oder konvex gewölbt sein. Beispielsweise können diese entsprechend eines Abschnitts einer Mantelfläche eines geraden Zylinders mit kreis- oder ellipsenförmiger Grundfläche zylinderförmig gewölbt sein.

Wichtig ist hervorzuheben, dass die genannten auf einer wie einleitend zum ersten Gegenstand der Erfindung definierten Lichtumlenkfläche befindlichen lichttechnisch unwirksamen Flächen, welche keinen gezielten Beitrag zur Lichtumlenkung für die Lichtverteilung in der mindestens einen Vorzugsrichtung leisten, der zweiten Lichtleiterauskoppelstruktur-Partie zugeordnet sein können, und vollständig oder teilweise mit einer Diffusor-Struktur versehen sein können. Die Diffusor-Struktur kann beispielsweise durch eine aufgeraute Oberfläche erhalten sein.

Ein zweiter Gegenstand der Erfindung betrifft ein Leuchtmittel mit mindestens einer Lichtquelle und wenigstens einem dieser zugeordneten, zuvor beschriebenen Lichtleiter. In den Lichtleiter wird Licht mindestens einer Lichtquelle an mindestens einer Lichteinkoppelfläche ein- und an mindestens einer von der Lichteinkoppelfläche verschiedenen Lichtauskoppelfläche wieder ausgekoppelt.

Das Leuchtmittel kann wenigstens eine Lichtemittierende Diode (LED) und/oder einen LED-Chip als Lichtquelle umfassen.

Der Lichtleiter kann an wenigstens eine LED oder wenigstens einen LED-Chip angespritzt sein. In diesem Fall wird die Lichteinkoppelfläche von den jeweils an eine LED bzw. einen LED-Chip unmittelbar anstoßenden Partien des Lichtleiters umfasst.

Ein dritter Gegenstand der Erfindung betrifft eine Kraftfahrzeugleuchte mit einem von einem Leuchtengehäuse und einer Lichtscheibe umschlossenen Leuchteninnenraum und mindestens einem darin beherbergten Leuchtmittel für wenigstens eine Lichtfunktion der Kraftfahrzeugleuchte. Das mindestens eine Leuchtmittel umfasst neben wenigstens einer Lichtquelle zumindest einen der wenigstens einen Lichtquelle zugeordneten, zuvor beschriebenen Lichtleiter.

Die Kraftfahrzeugleuchte kann beispielsweise als Heckleuchte für ein Kraftfahrzeug ausgebildet sein.

Es ist ersichtlich, dass die Erfindung durch eine Hybrid-Lichtleiterauskoppelstruktur verwirklicht sein kann, bestehend aus:
- mindestens einer auf wenigstens einer von zumindest einer Lichtauskoppelfläche eines Lichtleiters verschiedenen Lichtumlenkfläche vorgesehenen ersten Lichtleiterauskoppelstruktur-Partie mit wenigstens einem Teil einer totalreflektierenden Prismenstruktur, vermittels welchen Teils Licht im Lichtleiter gezielt in einer oder mehreren Richtungen umgelenkt und an der Lichtauskoppelfläche unter Brechung beim Übergang vom Lichtleitermaterial zur umgebenden Luft in wenigstens einer Vorzugsrichtung unter Einhaltung eines den lichttechnischen Anforderungen in Vorzugsrichtung genügenden Lichtstroms bzw. Leuchtdichte ausgekoppelt wird, sowie
- mindestens einer ebenfalls auf der wenigstens einen von der zumindest einen Lichtauskoppelfläche des Lichtleiters verschiedenen Lichtumlenkfläche vorgesehenen, an zumindest eine erste Lichtleiterauskoppelstruktur-Partie angrenzenden zweiten Lichtleiterauskoppelstruktur-Partie mit wenigstens einer Diffusor-Struktur, vermittels der Licht im Lichtleiter mit einer statistischen Verteilung umgelenkt und an der Lichtauskoppelfläche unter Brechung beim Übergang vom Lichtleitermaterial zur umgebenden Luft diffus ausgekoppelt wird.

Vorteile gegenüber dem Stand der Technik ergeben sich unter Anderem durch ein homogenes Erscheinungsbild aus verschiedenen Betrachtungsrichtungen frei von durch das menschliche Auge wahrnehmbaren, unterschiedlichen Helligkeiten unter gleichzeitiger Erfüllung der beispielsweise durch gesetzliche Vorschriften vorgegebenen und die Lichtverteilung in einer oder mehreren Vorzugsrichtungen sowie die Leuchtdichte in der mindestens einen Vorzugsrichtung umfassenden lichttechnischen Anforderungen bei gleichzeitig geringer erforderlicher in den Lichtleiter einzukoppelnder Strahlungsleistung bzw. geringem erforderlichem in den Lichtleiter einzukoppelndem Lichtstrom. Hierdurch wird ein besonders wirtschaftlicher und effektiver Umgang mit der zur Verfügung stehenden Energie erzielt. Bei Kraftfahrzeuganwendungen ergibt sich dadurch eine besonders günstige Auslegung und Dimensionierung des Bordnetzes einhergehend mit einer verbesserten Wirtschaftlichkeit und Gewichtseinsparungen.

Die Verknüpfung zwischen diffus wirkenden Licht-Auskoppelelementen der zweiten Lichtleiterauskoppelstruktur-Partie und gerichtet wirkenden Licht-Auskoppelelementen der ersten Lichtleiterauskoppelstruktur-Partie erlaubt eine Abstimmung zwischen lichttechnischer Effizienz bezogen auf die gewünschte Auskoppelrichtung bzw. die mindestens eine Vorzugsrichtung des gesamtem Lichtleiters und dessen homogenen Leuchtdichtebildes einerseits als auch die grundsätzlich steuerbare Homogenisierung des Leuchtdichtebildes andererseits.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: einen Abschnitt eines Lichtleiters nach dem Stand der Technik in einer Draufsicht auf dessen dem Betrachter zugewandte, eine Lichtaustrittsfläche umfassende Lichtleitervorderseite.
- Fig. 2: den Abschnitt eines Lichtleiters aus Fig. 1 in einer perspektivischen Ansicht im Röntgenblick gesehen, mit einer auf einer der Lichtleitervorderseite gegenüberliegenden Lichtleiterrückseite angeordneten totalreflektierenden Prismenstruktur mit wohldefinierten Prismenelementen.
- Fig. 3: einen Abschnitt eines Lichtleiters gemäß eines ersten Ausführungsbeispiels der Erfindung in einer Draufsicht auf dessen dem Betrachter zugewandte, eine mit einer Hybrid-Lichtleiterauskoppelstruktur versehene sowie einer Lichtaustrittsfläche gegenüberliegende Lichtumlenkfläche umfassende Lichtleiterrückseite.
- Fig. 4: einen Abschnitt eines Lichtleiters gemäß eines zweiten Ausführungsbeispiels der Erfindung in einer Draufsicht auf dessen dem Betrachter zugewandte, eine mit einer Hybrid-Lichtleiterauskoppelstruktur versehene sowie einer Lichtaustrittsfläche gegenüberliegende Lichtumlenkfläche umfassende Lichtleiterrückseite.
- Fig. 5: Detailansichten verschiedener prinzipieller Ausgestaltungen von Hybrid-Lichtleiterauskoppelstrukturen bzw. von Partien einer oder mehrerer Hybrid-Lichtleiterauskoppelstrukturen.
- Fig. 6: eine perspektivische Ansicht einer Hybrid-Lichtleiterauskoppelstruktur.
- Fig. 7: eine perspektivische Ansicht eines Prismenelements einer Hybrid-Lichtleiterauskoppelstruktur in Fig. 7 a) sowie eines Ausschnitts einer solche benachbarte Prismenelemente umfassenden Hybrid-Lichtleiterauskoppelstruktur in Fig. 7 b).
- Fig. 8: Detailansichten verschiedener prinzipieller Ausgestaltungen von Prismenelementen einer Hybrid-Lichtleiterauskoppelstruktur.

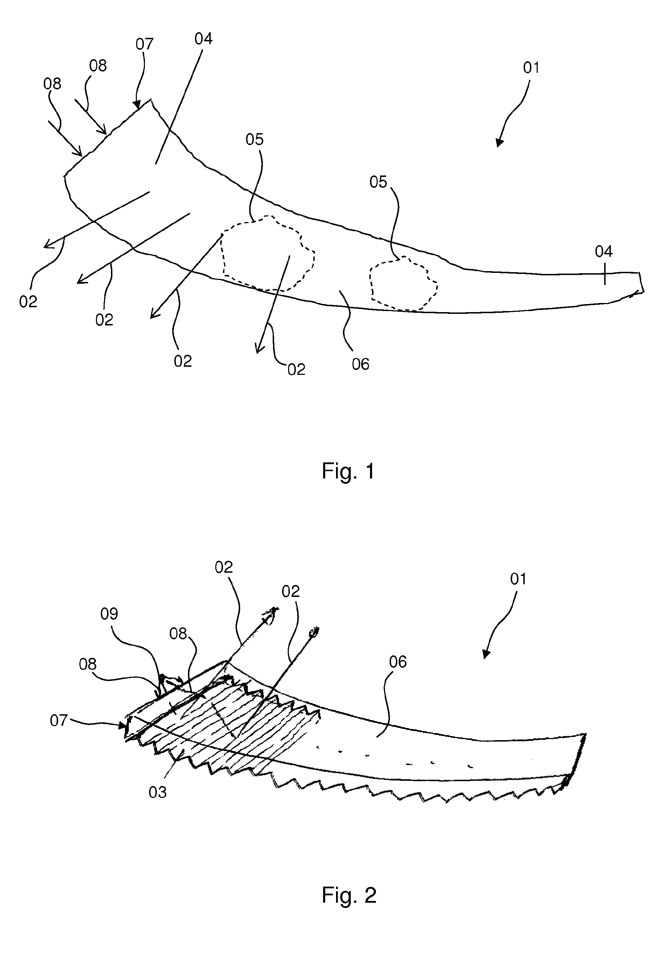

Das Leuchtdichtebild eines in Fig. 1 und Fig. 2 dargestellten Lichtleiters 01 nach dem Stand der Technik, der zur Erzeugung einer Signalfunktion oder einer Designfunktion in einer Kraftfahrzeugheckleuchte vorgesehen ist und dessen Lichtauskopplung in einer oder mehreren mit einer gewünschten Signalrichtung übereinstimmenden Vorzugsrichtung 02 mittels totalreflektierender Prismenflächen 03 erzielt wird, erscheint im Allgemeinen inhomogen. Der Grund hierfür ist, dass die verwendeten wohldefinierten Prismenflächen 03 bis zu einem gewissen Grad eine homogene Leuchtdichteverteilung der Auskopplung von an mindestens einer Lichteinkoppelfläche 07 in den Lichtleiter 01 eingekoppelten Lichts 08 mindestens einer Lichtquelle 09 auf einer Lichtauskoppelfläche 06 des Lichtleiters 01 liefern, die sich in einem oder mehreren homogenen Bereichen 04 bemerkbar macht, jedoch örtlich Leuchtdichtekonzentrationen entstehen, die durch die Prismenkanten oder durch eine über den Querschnitt des Lichtleiters 01 auftretenden erhöhten oder erniedrigten Lichtstrom der winkelabhängigen Lichteinkopplung durch die Lichtquelle 09 hervorgerufen werden, die sich durch einen oder mehrere inhomogene Bereiche 05 bemerkbar machen.

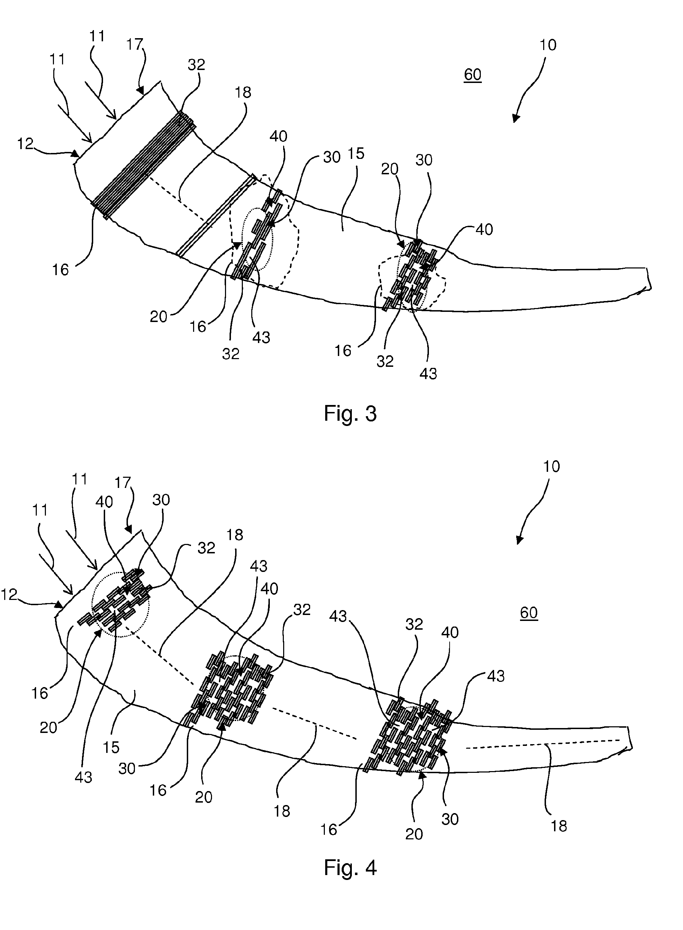

Ein in den Fig. 3 bis Fig. 8 ganz oder in Teilen dargestellter erfindungsgemäßer Lichtleiter 10 umfasst mindestens eine zur Einkopplung von Licht 11 mindestens einer Lichtquelle in den Lichtleiter 01 vorgesehene Lichteinkoppelfläche 12. Darüber hinaus weist der Lichtleiter 10 mindestens eine von der wenigstens einen Lichteinkoppelfläche 12 verschiedene, beispielsweise zumindest einen Teil einer Lichtleitervorderseite 13 bildende Lichtauskoppelfläche 14. Außerdem umfasst der Lichtleiter 10 wenigstens eine von der zumindest einen Lichtauskoppelfläche 14 verschiedene, beispielsweise zumindest einen Teil einer Lichtleiterrückseite 15 bildende Lichtumlenkfläche 16.

Zur Homogenisierung des Erscheinungsbilds ist bei einem in den Fig. 3 bis Fig. 8 ganz oder in Teilen dargestellten Lichtleiter 10 vorgesehen, dass mindestens eine Lichtumlenkfläche 16 mit einer Hybrid-Lichtleiterauskoppelstruktur 20 bestehend aus mindestens einer ersten Lichtleiterauskoppelstruktur-Partie 30 und wenigstens einer an zumindest eine erste Lichtleiterauskoppelstruktur-Partie 30 angrenzenden zweiten Lichtleiterauskoppelstruktur-Partie 40 versehen ist.

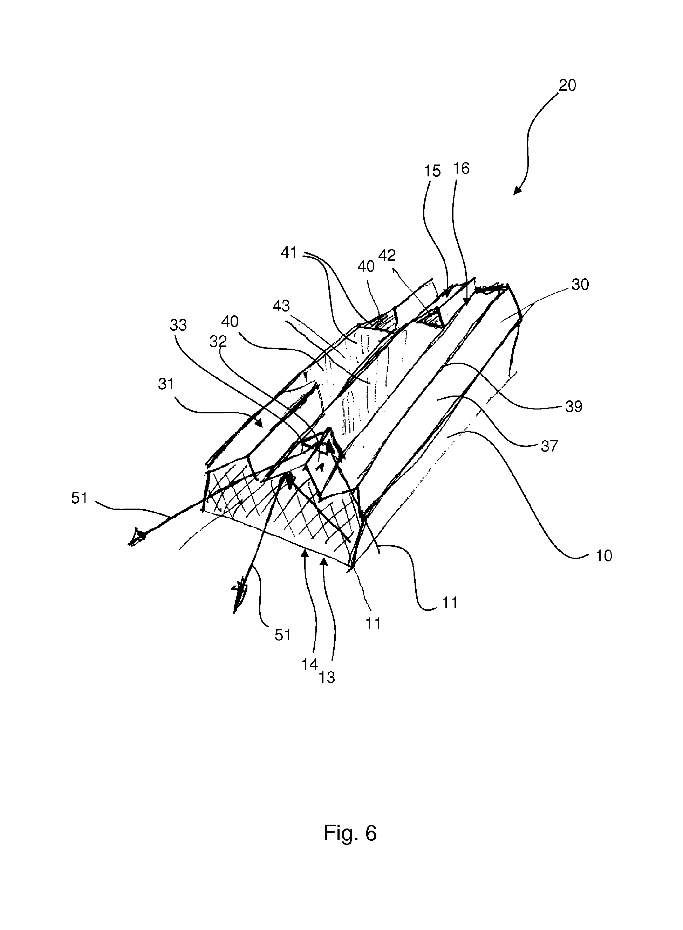

Die mindestens eine erste Lichtleiterauskoppelstruktur-Partie 30 umfasst zumindest teilweise wenigstens eine Prismenstruktur 31, vermittels der in den Lichtleiter 10 an wenigstens einer Lichteinkoppelfläche 12 eingekoppeltes Licht 11 gezielt in mindestens einer Richtung 51 zur Lichtauskoppelfläche 14 hin umgelenkt und an der Lichtauskoppelfläche 14 unter Brechung beim Übergang vom Lichtleitermaterial 17 zum umgebenden Medium 60, bei dem es sich typischerweise um Luft handelt, in wenigstens einer Vorzugsrichtung 50 unter Einhaltung einer vorgegebenen Leuchtdichte ausgekoppelt wird (Fig. 6).

Die mindestens eine zweite Lichtleiterauskoppelstruktur-Partie 40 umfasst wenigstens eine Diffusor-Struktur 41, vermittels der in den Lichtleiter 10 an wenigstens einer Lichteinkoppelfläche 12 eingekoppeltes Licht 11 mit einer statistischen Verteilung umgelenkt und an der Lichtauskoppelfläche 14 unter Brechung beim Übergang vom Lichtleitermaterial zum umgebenden Medium 60 diffus ausgekoppelt wird.

Die Diffusor-Struktur 41 umfasst wenigstens eine lichttechnisch unwirksame Fläche 42. Diese kann beispielsweise gezielt aufgeraut ausgeführt sein, um eine besonders gute Streuung des auf sie treffenden Lichts 11 zu bewirken.

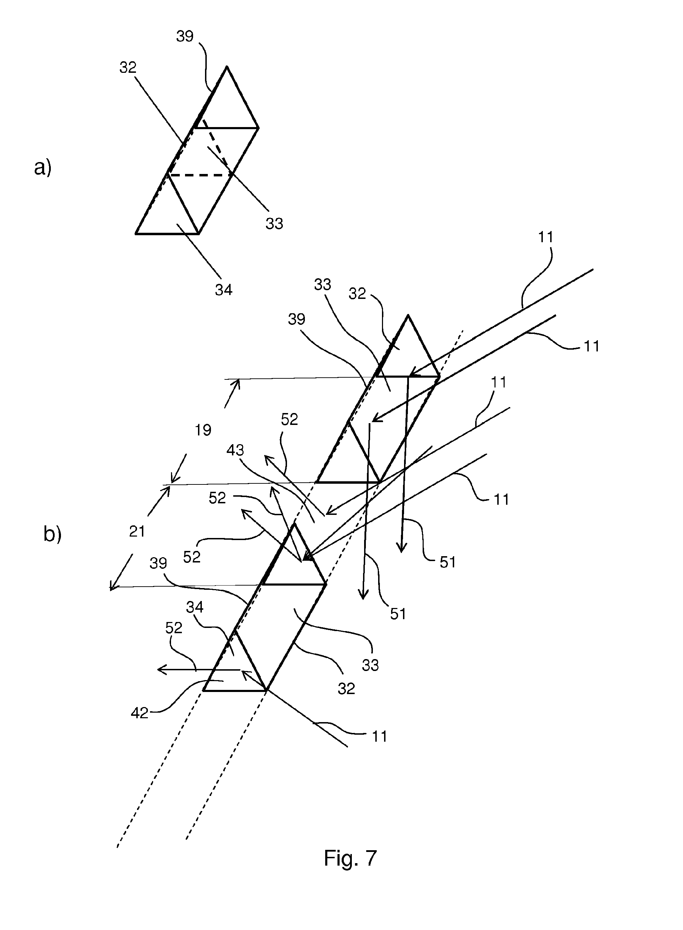

Die Prismenstruktur 31 weist wenigstens eine gemäß den die Lichtverteilung in mindestens einer Vorzugsrichtung 50 sowie die Leuchtdichte in der mindestens einen Vorzugsrichtung 50 umfassenden lichttechnischen Anforderungen definierte Wirkfläche 33 zumindest eines Prismenelements 32 auf (Fig. 7).

Bei einem Prismenelement 32 handelt es sich dabei bevorzugt um eine Struktur mit einer oder mehreren eine interne Totalreflexion im Lichtleiter 10 bewirkenden Wirkflächen 33. Eine ein oder mehrere solche Prismenelemente 32 umfassende Prismenstruktur 31 wird auch als totalreflektierende Prismenstruktur bezeichnet.

Bei einer Wirkfläche 33 handelt es sich um eine lichttechnisch wirksame Fläche eines Prismenelements 32, welche eine gemäß den lichttechnischen Anforderungen gezielte Umlenkung des in den Lichtleiter 10 eingekoppelten Lichts 11 in einer Richtung 51 hin zur Lichtaustrittsfläche 14 bewirkt, so dass das derart gezielt umgelenkte Licht 11 unter Brechung beim Übergang vom Lichtleitermaterial an ein den Lichtleiter 10 umgebendes Medium 60 in einer Vorzugsrichtung 50 aus der Lichtaustrittsfläche 14 aus dem Lichtleiter 10 austritt. Die Wirkfläche 33 unterscheidet sich damit von einer beispielsweise eine Stirnfläche 34 eines Prismenelements 32 der Prismenstruktur 31 umfassenden lichttechnisch unwirksamen Fläche 42 dadurch, dass bei einer lichttechnisch unwirksamen Fläche 42 wenn überhaupt nur ein geringer Teil des Lichts 11 eher zufällig, gemäß einer statistischen Verteilung in einer entsprechenden Richtung 51 umgelenkt wird. Vielmehr findet an einer lichttechnisch unwirksamen Fläche 42 eine Umlenkung in einer oder mehreren, einer statistischen Verteilung unterliegenden Richtungen 52 statt, welche einen Austritt des Lichts 11 in einer anderen, als einer Vorzugsrichtung 50 zur Folge haben. Bei der Wirkfläche 33 ist eine solche Umlenkung in einer einen Austritt in Vorzugsrichtung 50 verursachender Richtung 51 durch Lage und Orientierung gezielt konstruktiv gewollt und erreicht und betrifft den größten Teil des auf sie auftreffenden Lichts 11, vorzugsweise den gesamten Teil.

Die zweite Lichtleiterauskoppelstruktur-Partie 40 kann eine oder mehrere lichttechnisch unwirksame bzw. für die Lichtverteilung in der mindestens einen Vorzugsrichtung 50 unwirksame Flächen 42, wie etwa eine oder mehrere Stirnflächen 34 der Prismenelemente 32 der Prismenstruktur 31 umfassen.

Alternativ oder zusätzlich kann die zweite Lichtleiterauskoppelstruktur-Partie 40 zwischen in Erstreckungsrichtung entlang einer Mittelachse 18 beispielsweise eines stabförmigen Lichtleiters 10 und/oder quer zur Erstreckungsrichtung beispielsweise eines stabförmigen Lichtleiters 10 benachbarten Prismenelementen 32 liegende Flächenabschnitte 43 umfassen. Diese Flächenabschnitte 43 können ebenso wie die zuvor beispielhaft erwähnten Stirnflächen 34 der Prismenelemente aufgeraut ausgeführt bzw. mit einer vorgegebenen Oberflächenrauigkeit versehen sein.

Eine Mittelachse 18 kann dabei beispielsweise definiert sein als stetige oder unstetige mathematische Kurve, auf der die Schwerpunkte aller aufeinander folgender Querschnittsflächen des Lichtleiters liegen. Aus dieser möglichen Unstetigkeit heraus ergibt sich die Möglichkeit, dass der Lichtleiter 10 in aufeinander folgenden Abschnitten verschiedene Mittelachsen 18 aufweist, weshalb in Folgenden von mindestens einer Mittelachse 18 die Rede ist.

Zwischen gegebenenfalls in Richtung entlang der mindestens einen Mittelachse 18 sowie gegebenenfalls alternativ oder zusätzlich quer zu der mindestens einen Mittelachse 18 benachbarten Prismenelementen 32 liegende Flächenabschnitte 43 können wie in Fig. 3, Fig. 4, Fig. 5 und Fig. 6 dargestellt gleiche und/oder unterschiedliche Abmessungen und/oder gleiche und/oder unterschiedliche Geometrien in und/oder quer zur wenigstens einen Mittelachse 18 des Lichtleiters 10 aufweisen.

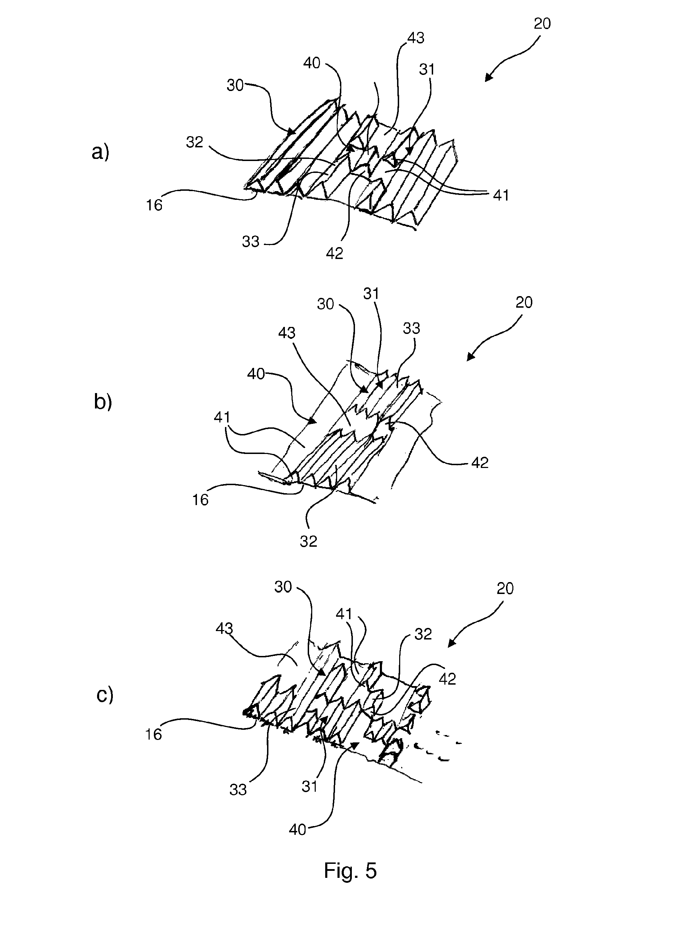

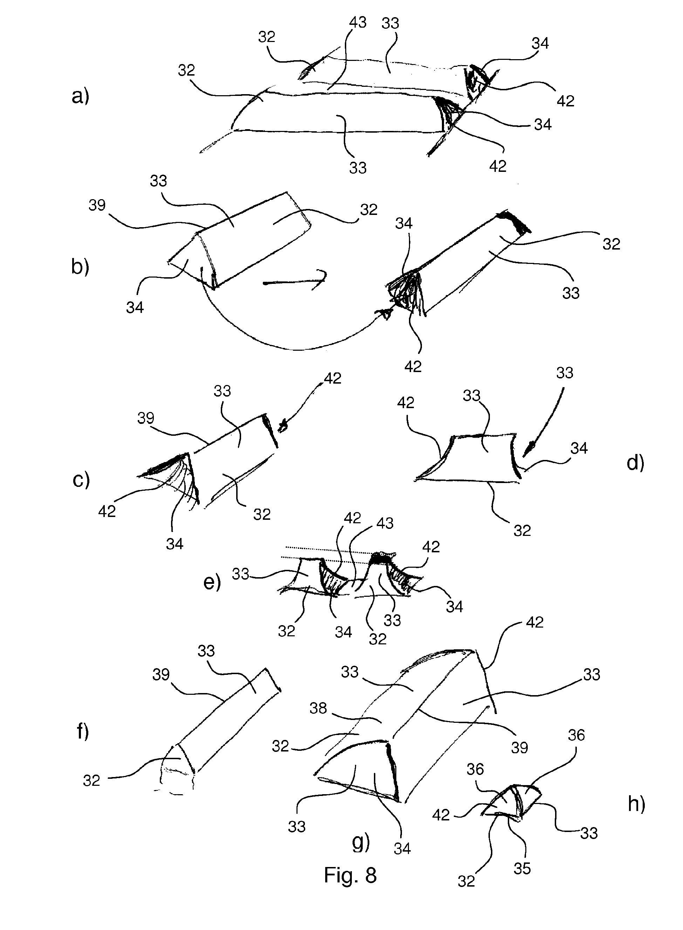

Benachbarte Prismenelemente 32 der Prismenstruktur 31 der ersten Lichtleiterauskoppelstruktur-Partie 30 können wie in Fig. 5 dargestellt unterschiedliche breit und/oder wie in Fig. 8 e) dargestellt unterschiedlich hoch und/oder wie in Fig. 8 b) auf ihrer Vorder- und/oder Rückseite unterschiedlich geneigt beispielsweise auf einer Lichtleiterrückseite 15 aufstehend ausgebildet sein. Alternativ oder zusätzlich können benachbarte Prismenelemente 31 unterschiedliche Orientierungen relativ zu einer Mittelachse 18 des beispielsweise stabförmigen Lichtleiters 10 aufweisen.

Die Prismenstruktur 31 kann wie in Fig. 8 h) dargestellt pyramidenförmige Prismenelemente 32, so genannte Dots 35, mit allseitig sich erhebenden und in einer Spitze treffenden Mantelflächen 36 umfassen. Von diesen Mantelflächen 36 können eine, mehrere oder alle lichttechnisch wirksame Wirkflächen 33 umfassen, wohingegen die verbleibenden Mantelflächen 36 lichttechnisch unwirksame Flächen 42 sein können. Die Prismenstruktur 31 kann alternativ oder zusätzlich wie in Fig. 8 a), Fig. 8 b) und Fig. 8 c) dargestellt sägezahnförmige Prismenelemente 31 mit nur zwei linienförmig aneinander angrenzenden lichttechnisch wirksamen Wirkflächen 33 sowie diese beidseitig abschließenden, Stirnflächen 34 bildenden lichttechnisch unwirksamen Flächen 42 umfassen. Beispielsweise können hierzu wie in Fig. 8 b) angedeutet Stirnflächen 34 der Prismenelemente 32 gezielt mit einer Oberflächenrauigkeit versehen sein.

Wichtig ist hervorzuheben, dass die Prismenstruktur 31 als sich über die gesamte Breite des Lichtleiters 10 erstreckende Vollzacken 37 ausgeführte Prismenelemente 32 umfassen kann.

Die lichttechnisch wirksamen Wirkflächen 33 der Prismenelemente 32 können ebenso wie die lichttechnisch unwirksamen, beispielsweise Stirnflächen 34 der Prismenelemente umfassenden Flächen 42 wie in Fig. 8 d), Fig. 8 e) Fig. 8 f), Fig. 8 g) und Fig. 8 h) dargestellt zumindest teilweise abschnittsweise konkav und/oder konvex gewölbt sein. Beispielsweise können diese entsprechend eines Abschnitts einer Mantelfläche 38 eines geraden Zylinders mit kreis- oder ellipsenförmiger Grundfläche wie in Fig. 8 g) dargestellt zylinderförmig gewölbt sein.

Der Lichtleiter 10 kann wie in Fig. 3 und Fig. 4 dargestellt stabförmig ausgeführt sein. Dabei bildet mindestens eine Stirnseite 17 wenigstens eine Lichteinkoppelfläche 12. Die Stirnseite 17 verbindet die sich entlang wenigstens einer Mittelachse 18 des Lichtleiters 10 erstreckende und zumindest eine Lichtauskoppelfläche 14 umfassende Lichtleitervorderseite 13 mit der sich ebenfalls entlang der wenigstens einen Mittelachse 18 des Lichtleiters 10 erstreckenden und zumindest eine Lichtumlenkfläche 16 umfassenden Lichtleiterrückseite 15. Der Lichtleiter 10 kann dabei einen zumindest in einer Ebene gekrümmten Verlauf seiner mindestens einen Mittelachse 18 aufweisen.

Die Länge 19 eines Prismenelements 32 entlang der Prismenkante 39 kann in einem optimalen Verhältnis zur Lückenlänge bzw. zur Erstreckung 21 eines sich anschließenden Flächenabschnitts 43 in der selben Orientierung der Prismenkante 39 stehen.

Wichtig ist hervorzuheben, dass die Erfindung vorsieht, um das Leuchtdichteerscheinungsbild eines Lichtleiters 10 mit auskoppelnder Prismenstruktur 31 zu homogenisieren, das Aufsplitten der beim Stand der Technik allsamt als Vollzacken 37 ausgeführten Prismenelemente 32 in Einzelstücke entlang der Prismenkante 39 (Fig. 6, Fig. 7) vorgeschlagen wird. Die durch diese Aufsplittung entstehenden zwei zusätzlichen Flächen 42 die im Wirkschnitt des so entstandenen Teilprismas liegen und seine Länge begrenzen sowie ein Flächenabschnitt 43 auf der beim Stand der Technik ansonsten vom Vollzacken 37 eingenommenen Lichtumlenkfläche 16. Dieser Flächenabschnitt 43, der zwischen zwei benachbarten Teilprismen entsteht, zusammen mit den die Stirnseiten 34 der Prismenelemente 32 bildenden lichttechnisch unwirksamen Flächen 42, lenken einfallendes Licht 11 nun nicht mehr in einer Vorzugsrichtung 50 sondern in viele Richtungen 52 im Raum ab, so dass örtlich eine Diffusorwirkung erzeugt werden kann, ohne die gerichtete Auskopplung über die gesamte Prismenlänge an einem Ort des Lichtleiters 10 ganz zu verlieren. Damit lassen sich örtliche Konzentrationen im Leuchtdichteerscheinungsbild des Lichtleiters 10 kompensieren und somit eine gesamte Homogenisierung des Leuchtdichtebildes erzielen, wobei eine bessere lichttechnische Effizienz im Vergleich zu statistisch strukturierten Diffusorflächen erreicht wird. Die Prismenelemente einer Lichtumlenkfläche 16, also die Wirkflächen 33 der Prismenelemente 32, welche so ausgelegt sind, dass sie das Licht 11 in eine gewünschte Vorzugsrichtung 50 reflektieren, sind nunmehr nicht mehr oder zumindest nicht vollständig als Vollzacken 37 ausgeführt, sondern in ihrer Zackenlängsrichtung entlang der Prismenkante 39 in kleinere Prismenelemente 32 mit Zwischenräumen aufgeteilt. Dadurch ergeben sich zusätzliche lichttechnisch unwirksame Flächen 42 senkrecht zu den Wirkflächen 33 jeden Prismenelements 32, d.h. parallel zu deren Hauptschnitt, die nun in beliebige Richtungen 52, nun nicht mehr vorzugsweise in die Zielrichtung 51 reflektieren bzw. brechen. Die Form dieser für die gerichtete Ablenkung lichttechnisch unwirksamen Flächen 42 kann von der Planheit abweichen- sie kann z.B. konkav oder konvex gestaltet werden, um das Streuverhalten anzupassen. Diese Aufsplittung in Einzelprismen kann sowohl nur lokal-wenn erforderlich, als auch über den gesamten Bereich der der Lichtauskoppelfläche 14 des Lichtleiters 10 gegenüberliegenden Lichtumlenkfläche 16 erfolgen. Je nachdem, welcher Bereich der Zackenfläche aufgesplittet wird, bzw. ob die Abstände zwischen den Einzelprismen regelmäßig oder unregelmäßig gewählt werden, kann eine eher statistisch geprägte oder eine eher regelmäßige Struktur erzeugt werden. Es können sich auch Bereiche mit gerichtet ablenkender Zackenstruktur als auch der abgeleiteten Diffusorstruktur abwechseln, oder auch jeweils ausschließlich vorgesehen sein. Auch kann die Form der Wirkflächen 33 eines Originalprismas oder eines Teilprismas in eine nicht planförmige Fläche, z.B. in eine Zylinderfläche, überführt werden und somit in eine eher lichttechnisch unwirksame Fläche 42 umgewandelt werden (Fig. 8 b)).

Die Erfindung ist insbesondere im Bereich der Herstellung von Lichtleitern und Leuchtmitteln für Kraftfahrzeugleuchten sowie der Herstellung von Kraftfahrzeugleuchten selbst gewerblich anwendbar.

### Bezugszeichenliste

- 01: Lichtleiter (Stand der Technik)
- 02: Vorzugsrichtung
- 03: Prismenfläche
- 04: homogener Bereich
- 05: inhomogener Bereich
- 06: Lichtauskoppelfläche
- 07: Lichteinkoppelfläche
- 08: Licht
- 09: Lichtquelle
- 10: Lichtleiter (Erfindung)
- 11: Licht
- 12: Lichteinkoppelfläche
- 13: Lichtleitervorderseite
- 14: Lichtauskoppelfläche
- 15: Lichtleiterrückseite
- 16: Lichtumlenkfläche
- 17: Stirnseite
- 18: Mittelachse
- 19: Länge
- 20: Hybrid-Lichtleiterauskoppelstruktur
- 21: Erstreckung
- 30: erste Lichtleiterauskoppelstruktur-Partie
- 31: Prismenstruktur
- 32: Prismenelement
- 33: Wirkfläche
- 34: Stirnfläche
- 35: Dot
- 36: Mantelfläche
- 37: Vollzacken
- 38: Mantelfläche
- 39: Prismenkante
- 40: zweite Lichtleiterauskoppelstruktur-Partie
- 41: Diffusor-Struktur
- 42: lichttechnisch unwirksame Fläche
- 43: Flächenabschnitt

- 50: Vorzugsrichtung
- 51: Richtung
- 52: Richtung

- 60: den Lichtleiter umgebendes Medium

## Patentansprüche

1. Lichtleiter (10) mit mindestens einer Lichteinkoppelfläche (12), mindestens einer von der wenigstens einen Lichteinkoppelfläche (12) verschiedenen Lichtauskoppelfläche (14), sowie wenigstens einer von der zumindest einen Lichtauskoppelfläche (14) verschiedenen Lichtumlenkfläche (16),
**dadurch gekennzeichnet,**
**dass** mindestens eine Lichtumlenkfläche (16) mit einer Hybrid-Lichtleiterauskoppelstruktur (20) bestehend aus mindestens einer ersten Lichtleiterauskoppelstruktur-Partie (30) und wenigstens einer an zumindest eine erste Lichtleiterauskoppelstruktur-Partie (30) angrenzenden zweiten Lichtleiterauskoppelstruktur-Partie (40) versehen ist, wobei:
- die mindestens eine erste Lichtleiterauskoppelstruktur-Partie (30) zumindest zum Teil wenigstens eine Prismenstruktur (31) umfasst, vermittels der in den Lichtleiter (10) an wenigstens einer Lichteinkoppelfläche (12) eingekoppeltes Licht (11) gezielt in mindestens einer Richtung (51) zur Lichtauskoppelfläche (14) hin umgelenkt und an der Lichtauskoppelfläche (14) unter Brechung beim Übergang vom Lichtleitermaterial zum umgebenden Medium (60) in wenigstens einer Vorzugsrichtung (50) unter Einhaltung einer vorgegebenen Leuchtdichte ausgekoppelt wird, und
- die mindestens eine zweite Lichtleiterauskoppelstruktur-Partie (40) wenigstens eine Diffusor-Struktur (41) umfasst, vermittels der in den Lichtleiter (10) an wenigstens einer Lichteinkoppelfläche (12) eingekoppeltes Licht (11) mit einer statistischen Verteilung umgelenkt (52) und an der Lichtauskoppelfläche (14) unter Brechung beim Übergang vom Lichtleitermaterial zum umgebenden Medium (60) diffus ausgekoppelt wird.

2. Lichtleiter nach Anspruch 1,
**dadurch gekennzeichnet,**
**dass** der Lichtleiter (10) stabförmig ist, wobei mindestens eine Stirnseite (17) wenigstens eine Lichteinkoppelfläche (12) bildet, welche eine sich entlang einer Mittelachse (18) des Lichtleiters (10) erstreckende und zumindest eine Lichtauskoppelfläche (14) umfassende Lichtleitervorderseite (13) mit einer sich entlang einer Mittelachse (18) des Lichtleiters (10) erstreckenden und zumindest eine Lichtumlenkfläche (16) umfassenden Lichtleiterrückseite (15) verbindet.

3. Lichtleiter nach Anspruch 1 oder 2,
**dadurch gekennzeichnet,**
**dass** der Lichtleiter (10) einen zumindest in einer Ebene gekrümmten Verlauf zumindest einer Mittelachse (18) aufweist.

4. Lichtleiter nach Anspruch 1, 2 oder 3,
**dadurch gekennzeichnet,**
**dass** die Prismenstruktur (31) wenigstens eine gemäß die Lichtverteilung in mindestens einer Vorzugsrichtung (50) sowie die Leuchtdichte in der mindestens einen Vorzugsrichtung (50) umfassenden lichttechnischen Anforderungen definierte Wirkfläche (33) zumindest eines Prismenelements (32) aufweist.

5. Lichtleiter nach Anspruch 4,
**dadurch gekennzeichnet,**
**dass** das Prismenelement (32) eine Struktur mit mindestens einer eine interne Totalreflexion im Lichtleiter bewirkenden Wirkfläche (33) umfasst.

6. Lichtleiter nach Anspruch 4 oder 5,
**dadurch gekennzeichnet,**
**dass** die zweite Lichtleiterauskoppelstruktur-Partie (40) mindestens eine für die Lichtverteilung in der mindestens einen Vorzugsrichtung (50) lichttechnisch unwirksame Fläche (42) mindestens eines Prismenelements (32) der Prismenstruktur (31) umfasst.

7. Lichtleiter nach Anspruch 4, 5 oder 6,
**dadurch gekennzeichnet,**
**dass** die zweite Lichtleiterauskoppelstruktur-Partie (40) zwischen in einer Erstreckungsrichtung des Lichtleiters (10) und/oder quer zur Erstreckungsrichtung des Lichtleiters (10) benachbarten Prismenelementen (32) liegende Flächenabschnitte (43) umfasst.

8. Lichtleiter nach einem der vorhergehenden Ansprüche,
**dadurch gekennzeichnet,**
**dass** die Diffusor-Struktur (41) wenigstens eine Fläche (42, 43) mit Wirkelementen in der Dimension einer Oberflächenrauigkeit umfasst.

9. Leuchtmittel umfassend mindestens eine Lichtquelle (09) sowie wenigstens einen zumindest einer Lichtquelle (09) zugeordneten Lichtleiter (10), in den Licht (11) mindestens einer Lichtquelle (09) an mindestens einer Lichteinkoppelfläche (12) ein- und an mindestens einer von der Lichteinkoppelfläche (12) verschiedenen Lichtauskoppelfläche (14) wieder ausgekoppelt wird,
**gekennzeichnet durch**
einen Lichtleiter (10) nach einem der vorhergehenden Ansprüche.

10. Kraftfahrzeugleuchte mit einem von einem Leuchtengehäuse und einer Lichtscheibe umschlossenen Leuchteninnenraum, mindestens einem in dem Leuchteninnenraum untergebrachten Leuchtmittel zur Erfüllung mindestens einer Lichtfunktion,
**gekennzeichnet durch**
ein Leuchtmittel nach Anspruch 9 mit einem Lichtleiter (10) nach einem der Ansprüche 1 bis 8.

## Geänderte Patentansprüche

### Geänderte Patentansprüche gemäss Regel 137(2) EPÜ.

**1.** Lichtleiter (10) mit mindestens einer Lichteinkoppelfläche (12), mindestens einer von der wenigstens einen Lichteinkoppelfläche (12) verschiedenen Lichtauskoppelfläche (14), sowie wenigstens einer von der zumindest einen Lichtauskoppelfläche (14) verschiedenen Lichtumlenkfläche (16), wobei mindestens eine Lichtumlenkfläche (16) mit einer Hybrid-Lichtleiterauskoppelstruktur (20) bestehend aus mindestens einer ersten Lichtleiterauskoppelstruktur-Partie (30) und wenigstens einer an zumindest eine erste Lichtleiterauskoppelstruktur-Partie (30) angrenzenden zweiten Lichtleiterauskoppelstruktur-Partie (40) versehen ist, und:
- die mindestens eine erste Lichtleiterauskoppelstruktur-Partie (30) zumindest zum Teil wenigstens eine Prismenstruktur (31) umfasst, vermittels der in den Lichtleiter (10) an wenigstens einer Lichteinkoppelfläche (12) eingekoppeltes Licht (11) gezielt in mindestens einer Richtung (51) zur Lichtauskoppelfläche (14) hin umgelenkt und an der Lichtauskoppelfläche (14) unter Brechung beim Übergang vom Lichtleitermaterial zum umgebenden Medium (60) in wenigstens einer Vorzugsrichtung (50) unter Einhaltung einer vorgegebenen Leuchtdichte ausgekoppelt wird,
- die mindestens eine zweite Lichtleiterauskoppelstruktur-Partie (40) wenigstens eine Diffusor-Struktur (41) umfasst, vermittels der in den Lichtleiter (10) an wenigstens einer Lichteinkoppelfläche (12) eingekoppeltes Licht (11) mit einer statistischen Verteilung umgelenkt (52) und an der Lichtauskoppelfläche (14) unter Brechung beim Übergang vom Lichtleitermaterial zum umgebenden Medium (60) diffus ausgekoppelt wird,
wobei die Prismenstruktur (31) wenigstens eine gemäß die Lichtverteilung in mindestens einer Vorzugsrichtung (50) sowie die Leuchtdichte in der mindestens einen Vorzugsrichtung (50) umfassenden lichttechnischen Anforderungen definierte Wirkfläche (33) zumindest eines Prismenelements (32) aufweist, **dadurch gekennzeichnet,**
**dass** die zweite Lichtleiterauskoppelstruktur-Partie (40) mindestens eine für die Lichtverteilung in der mindestens einen Vorzugsrichtung (50) lichttechnisch unwirksame Fläche (42) mindestens eines Prismenelements (32) der Prismenstruktur (31) umfasst.

**2.** Lichtleiter nach Anspruch 1,
**dadurch gekennzeichnet,**
**dass** der Lichtleiter (10) stabförmig ist, wobei mindestens eine Stirnseite (17) wenigstens eine Lichteinkoppelfläche (12) bildet, welche eine sich entlang einer Mittelachse (18) des Lichtleiters (10) erstreckende und zumindest eine Lichtauskoppelfläche (14) umfassende Lichtleitervorderseite (13) mit einer sich entlang einer Mittelachse (18) des Lichtleiters (10) erstreckenden und zumindest eine Lichtumlenkfläche (16) umfassenden Lichtleiterrückseite (15) verbindet.

**3.** Lichtleiter nach Anspruch 1 oder 2,
**dadurch gekennzeichnet,**
**dass** der Lichtleiter (10) einen zumindest in einer Ebene gekrümmten Verlauf zumindest einer Mittelachse (18) aufweist.

**4.** Lichtleiter nach Anspruch 1, 2 oder 3,
**dadurch gekennzeichnet,**
**dass** das Prismenelement (32) eine Struktur mit mindestens einer eine interne Totalreflexion im Lichtleiter bewirkenden Wirkfläche (33) umfasst.

**5.** Lichtleiter nach einem der vorhergehenden Ansprüche,
**dadurch gekennzeichnet,**
**dass** die zweite Lichtleiterauskoppelstruktur-Partie (40) zwischen in einer Erstreckungsrichtung des Lichtleiters (10) und/oder quer zur Erstreckungsrichtung des Lichtleiters (10) benachbarten Prismenelementen (32) liegende Flächenabschnitte (43) umfasst.

**6.** Lichtleiter nach einem der vorhergehenden Ansprüche,
**dadurch gekennzeichnet,**
**dass** die Diffusor-Struktur (41) wenigstens eine Fläche (42, 43) mit Wirkelementen in der Dimension einer Oberflächenrauigkeit umfasst.

**7.** Leuchtmittel umfassend mindestens eine Lichtquelle (09) sowie wenigstens einen zumindest einer Lichtquelle (09) zugeordneten Lichtleiter (10), in den Licht (11) mindestens einer Lichtquelle (09) an mindestens einer Lichteinkoppelfläche (12) ein- und an mindestens einer von der Lichteinkoppelfläche (12) verschiedenen Lichtauskoppelfläche (14) wieder ausgekoppelt wird,
**gekennzeichnet durch**
einen Lichtleiter (10) nach einem der vorhergehenden Ansprüche.

**8.** Kraftfahrzeugleuchte mit einem von einem Leuchtengehäuse und einer Lichtscheibe umschlossenen Leuchteninnenraum, mindestens einem in dem Leuchteninnenraum untergebrachten Leuchtmittel zur Erfüllung mindestens einer Lichtfunktion,
**gekennzeichnet durch**
ein Leuchtmittel nach Anspruch 7 mit einem Lichtleiter (10) nach einem der Ansprüche 1 bis 6.
